# EUROPÄISCHE PATENTSCHRIFT

(11) **EP 2 362 604 B1**
(45) Veröffentlichungstag und Bekanntmachung des Hinweises auf die Patenterteilung: **24.10.2012**
(21) Anmeldenummer: 10450023.6
(22) Anmeldetag: 18.02.2010
(51) Int. Cl.: H04W 4/00, H04L 12/00, H04L 29/08, H04W 84/18, H04W 4/04

(54) **Netzknoten für ein Ad-hoc-Netzwerk und Verfahren zum Bereitstellen von Applikationsdiensten in einem Ad-hoc-Netzwerk**
Network nodes for an ad-hoc network and method for providing application services in an ad-hoc network
Noeuds de réseau pour un réseau ad-hoc et procédé de préparation de services d'application dans un réseau ad-hoc

(43) Veröffentlichungstag der Anmeldung: 31.08.2011
(73) Patentinhaber: Kapsch TrafficCom AG, 1120 Wien (AT)
(72) Erfinder: Nagy, Oliver, 1190 Wien (AT); Güner, Refi-Tugrul, 2500 Baden (AT); Toplak, Erwin, 2521 Trumau (AT)
(74) Vertreter: Weiser, Andreas

(56) Entgegenhaltungen:
- EP-A1- 2 146 486
- WO-A1-03/034664
- DE-A1- 10 143 276

## Beschreibung

Die vorliegende Erfindung betrifft einen Netzknoten für ein Ad-hoc-Netzwerk aus einer Vielzahl gleichartiger Netzknoten, welche einander über Drahtlosverbindungen Applikationsdienste anbieten, die unterschiedlich sein können. Die Erfindung betrifft ferner ein Verfahren zum Bereitstellen von Applikationsdiensten in einem Ad-hoc-Netzwerk, dessen Netzknoten einander über Drahtlosverbindungen Applikationsdienste anbieten.

Drahtlose Ad-hoc-Netzwerke, d.h. Netzwerke, die sich aus einer Gruppe sich spontan zusammenfindender Teilnehmer (Netzknoten) bilden und durch Bewegung und Wechsel von Netzknoten in der Regel hochdynamisch sind, sind ein junges Forschungsgebiet, das zunehmend Anwendung und Verbreitung findet. Die vorliegende Erfindung befaßt sich insbesondere mit der Anwendung von Ad-hoc-Netzwerktechnologien zur Vernetzung von Fahrzeugen in sog. "Vehicular Ad-hoc Networks" (VANETs).

Für VANETs wurden bereits zahlreiche Routing-Algorithmen vorgeschlagen, um den bestmöglichen Weg für Datenpakete von einem Netzknoten zu einem anderen Netzknoten zu finden. Beispielsweise beschreibt die WO 03/034664 A1 das Berechnen von Routine-Tables in den Netzknoten, welche jeweils alle Pfade auflisten, über die ein Netzknoten auf andere Netzknoten mit gleichen Diensten zugreifen kann. Die bekannten Routing-Algorithmen für VANET-Netzwerkgraph-Modellierungen sind jedoch nicht geeignet, eine zufriedenstellende netzwerkweite Applikationsdienstevermittlung bereitzustellen. Die Erfindung setzt sich zur Aufgabe, eine solche zu schaffen.

Dokument EP 2 146 486 beschreibt eine on-board Einheit für ein Ad-hoc Netzwerk von Fahrzeugen.

Die Aufgabe der Erfindung wird gelöst durch einen Netzknoten wie in Anspruch 1 beschrieben und durch ein Verfahren wie in Anspruch 8 beschrieben. Weitere vorteilhafte Ausführungsformen sind Gegenstand der jeweiligen Unteransprüche.

In einem ersten Aspekt schafft die Erfindung zu diesem Zweck einen Netzknoten der eingangs genannten Art, der sich dadurch auszeichnet, daß er lokal und autark eine Liste aller ihm von anderen Netzknoten angebotenen Applikationsdienste mit zugehörigen Qualitätsklassen erzeugt und diese Liste anderen Netzknoten als Liste der von ihm mit diesen Qualitätsklassen angebotenen Applikationsdienste zur Verfügung stellt, wobei die genannte Qualitätsklasse zumindest von der Anzahl aufeinanderfolgender Netzknoten, über die der Applikationsdienst angeboten wird, und der vom letzten dieser Netzknoten angegebenen Qualitätsklasse abhängt.

Auf diese Weise wird in jedem Netzknoten eine lokale Applikationssicht in Form der genannten Liste aller diesem Netzknoten verfügbaren Applikationsdienste mit ihrer jeweiliger Dienstqualität erzeugt, welche Liste hier auch als "Local Available Service Table" (LAST) bezeichnet wird. Die LAST-Liste eines Netzknotens setzt sich - gleichsam rekursiv - aus den LAST-Listen der von diesem Netzknoten empfangbaren Nachbarknoten zusammen, welche sich wiederum aus den LAST-Listen deren Nachbarknoten zusammensetzen, usw. usf. Die LAST-Listen können somit von jedem Netzknoten lokal und autark erzeugt werden und geben dennoch eine vollständige Übersicht aller im gesamten Ad-hoc-Netzwerk aktuell verfügbaren Applikationsdienste wieder, ohne daß es dazu eines zentralen Verteil- oder Übersichtsmechanismus oder spezifischer Routing- bzw. Pfadsuchalgorithmen bedürfte.

Bevorzugt hängt die genannte Qualitätsklasse zusätzlich von der Verbindungsqualität der letzten Drahtlosverbindung ab, über die der Applikationsdienst angeboten wird, wobei die Verbindungsqualität wiederum insbesondere bevorzugt von der Bandbreite, Latenz und/oder von Bewegungsvektoren der Drahtlosverbindung abhängt. Dadurch können auch hochdynamisch und hochmobile Netzwerktopographien berücksichtigt werden.

Gemäß einer bevorzugten Ausführungsform der Erfindung enthält der Netzknoten ferner eine Liste gebuchter Applikationsdienste, überprüft die LAST-Liste der ihm angebotenen Applikationsdienste auf gebuchte Applikationsdienste und benachrichtigt im Übereinstimmungsfall eine Applikation im Netzknoten. Dadurch kann das Eintreten in bestimmte Dienstabdeckungsbereiche detektiert und zugehörige Applikationen z.B. automatisch gestartet werden.

Bevorzugt enthält die Liste angebotener Applikationsdienste zu jedem Applikationsdienst auch eine Zugriffsberechtigungsklasse, beispielsweise je nach Kostenpflicht oder Benutzergruppe.

Der erfindungsgemäße Netzknoten ist besonders für Fahrzeug-Ad-hoc-Netzwerke (VANETs) geeignet, in welchem Fall er eine Onboard-Unit (OBU) ist, wie sie derzeit z.B. für drahtlose Mautsysteme nach dem DSRC-, WAVE- oder GPS/GSM-Standard Verwendung findet.

In einem zweiten Aspekt schafft die Erfindung ein Verfahren zum Bereitstellen von Applikationsdiensten in einem Ad-hoc-Netzwerk, dessen Netzknoten einander über Drahtlosverbindungen Applikationsdienste anbieten, gekennzeichnet durch die Schritte
in einem Netzknoten: lokales und autarkes Erstellen einer Liste aller diesem Netzknoten von anderen Netzknoten angebotenen Applikationsdienste mit zugehörigen Qualitätsklassen und Zurverfügungstellen dieser Liste an andere Netzknoten als Liste der von ihm mit diesen Qualitätsklassen angebotenen Applikationsdienste,
wobei die genannte Qualitätsklasse zumindest von der Anzahl aufeinanderfolgender Netzknoten, über die ein Applikationsdienst angeboten wird, und der vom letzten dieser Netzknoten angegebenen Qualitätsklasse abhängt.

Hinsichtlich weiterer Merkmale und Vorteile des erfindungsgemäßen Verfahrens wird auf die obigen Ausführungen zum Netzknoten verwiesen.

Die Erfindung wird nachstehend anhand eines Ausführungsbeispiels unter Bezugnahme auf die begleitenden Zeichnungen näher erläutert, in denen zeigt:
Fig. 1 ein Fahrzeug-Ad-hoc-Netzwerk mit erfindungsgemäßen Netzknoten in der Übersicht;
Fig. 2 einen Ausschnitt des Netzwerks von Fig. 1 im Detail;
Fig. 3 den Aufbau einer LAST-Liste in einem Netzknoten; und
Fig. 4 Qualitätsklassen und deren Veränderung von Netzknoten zu Netzknoten in einem schematischen Diagramm.

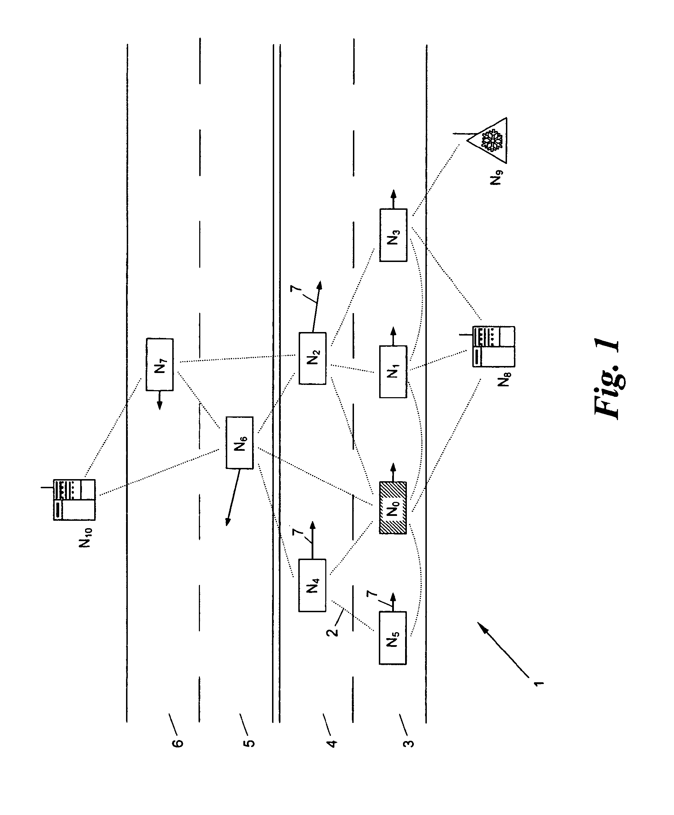

Fig. 1 zeigt eine Momentaufnahme eines Ad-hoc-Netzwerks 1 aus einer Vielzahl (hier: elf Stück) von Netzknoten N₀, N₁,... N₁₀, die über Drahtlosverbindungen 2 miteinander kommunizieren können. Die Drahtlosverbindungen 2 haben in der Regel eine begrenzte Reichweite, sodaß ein Netzknoten Nᵢ nur mit enger benachbarten Netzknoten direkt, d.h. über eine einzig Drahtlosverbindung 2 ("single-hop"), kommuniziert, hingegen mit anderen Netzknoten indirekt, d.h. über mehrere aufeinanderfolgende Drahtlosverbindungen 2 bzw. zwischenliegende Netzknoten Nᵢ ("multi-hop").

Die Drahtlosverbindungen 2 können von jeder in der Technik bekannten Art sein, beispielsweise DSRC-, Mobilfunk- oder WLAN-Verbindungen, insbesondere nach dem WAVE-Standard (Wireless Access in a Vehicle Environment).

Einige der Netzknoten Nᵢ sind im gezeigten Beispiel sog. Onboard-Units (OBUs), die von Fahrzeugen mitgeführt werden (siehe Netzknoten N₀ - N₇), andere sind z.B. stationäre Netzknoten, wie eine beispielhafte drahtlose Mautstation N₈ ("Mautbake"), eine Eiswarnanlage N₉ oder ein drahtloser Internet-Access-Point N₁₀. Beliebige andere Arten von Netzknoten Nᵢ sind vorstellbar, z.B. drahtlose Verkaufsautomaten für Eintrittskarten, Parkscheine, City-Maut-Tickets od.dgl., Kommunikationsterminals, Verkehrsüberwachungsanlagen, mobile Access-Points usw.

Die fahrzeuggebundenen Netzknoten N₀ - N₇ bewegen sich im gezeigten Beispiel auf einer vierspurigen Autobahn mit zwei Spuren 3, 4 in der einen Fahrtrichtung und zwei Spuren 5, 6 in der anderen Fahrtrichtung. Die Pfeile 7 versinnbildlichen den aktuellen Geschwindigkeitsvektor (Geschwindigkeit, Richtung) der mobilen OBU-Netzknoten N₀ - N₇.

Über die Drahtlosverbindungen 2 bieten die Netzknoten N₁ einander Applikationsdienste Sₙ an, und zwar sowohl solche, die direkt in dem jeweils anbietenden Netzknoten ihren Ursprung haben, siehe z.B. den Eiswarn-Dienste S₁ des Netzknotens N₉, als auch solche, die von einem Netzknoten lediglich weitervermittelt werden, wie es vorwiegend bei den OBU-Netzknoten N₀ - N₇ der Fall ist. In gleicher Weise können die einem Netzknoten Nᵢ angebotenen Applikationsdienste Sₙ sowohl von diesem Netzknoten selbst konsumiert werden, z.B. von einer Software-Applikation, die auf dem Netzknoten Nᵢ läuft, als auch von diesem Netzknoten wieder an andere Netzknoten weitervermittelt werden.

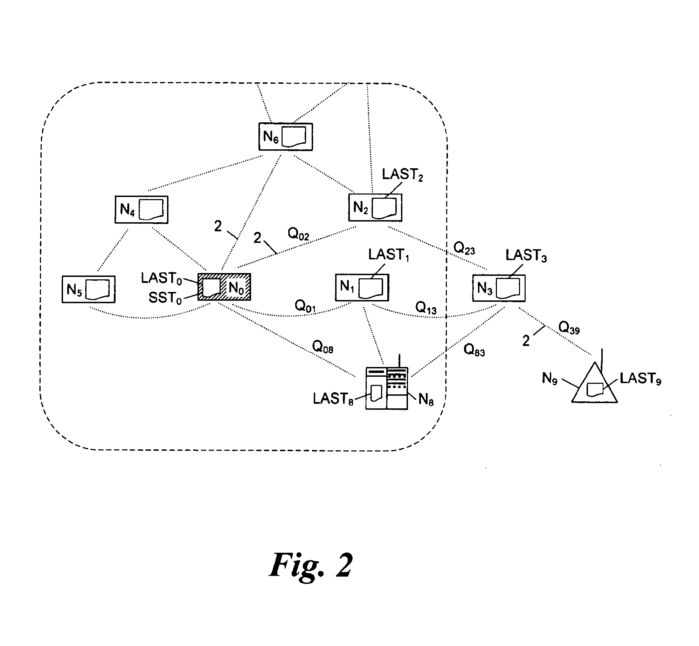

Für die genannten Zwecke erzeugt jeder Netzknoten Nᵢ eine Liste LASTᵢ aller ihm von anderen (über Drahtlosverbindungen 2 empfangbaren) Netzknoten Nᵢ angebotenen Applikationsdienste Sₙ. Die Liste LASTᵢ wird unter Bezugnahme auf die Fig. 2 - 4 nun näher erläutert.

Fig. 2 zeigt einen vereinfachten Ausschnitt auf das Ad-hoc-Netzwerk von Fig. 1 aus Sicht des Netzknotens N₀, welcher seine LAST-Liste LAST₀ auf Grundlage der direkten Drahtlosverbindungen 2 mit seinen unmittelbar benachbarten Netzknoten N₁, N₂, N₄, N₅, N₆ und N₈ erzeugt. Letztere verfügen wiederum über jeweilige - aus ihrer lokalen Sicht erzeugte - Listen LASTᵢ. Allgemein gesprochen erzeugen sich die Listen LASTᵢ gleichsam "rekursiv" jeweils aus den Listen der empfangbaren Netzknoten Nᵢ.

Jede Liste LASTᵢ enthält zu jedem für den Netzknoten Nᵢ verfügbaren Applikationsdienst Sₙ eine Qualitätsklasse QECᵢₙ (Quality Estimate Class) des Applikationsdienstes Sₙ. Die Qualitätsklasse QECᵢₙ setzt sich aus der Anzahl aufeinanderfolgender Drahtlosverbindungen 2 bzw. Netzknoten Nᵢ, über die der Applikationsdienst Sₙ angeboten wird ("hops"), und der vom letzten Netzknoten Nⱼ in dessen Liste LASTⱼ angegebenen Qualitätsklasse QECⱼₙ zusammen; sowie bevorzugt auch aus der Verbindungsqualität Qᵢⱼ der letzten Drahtlosverbindung 2, über die der Applikationsdienst Sₙ dem Netzknoten Nᵢ vom letzten Netzknoten Nⱼ angeboten wird.

Ein Beispiel: Der Dienst "Eiswarnung", der vom Netzknoten N₉ in seiner Liste LAST₉ als Dienst S₁ mit der z.B. besten Qualitätsklasse QEC₉₁ von "0" (stellvertretend für "Zero Hop", hohe Verfügbarkeit und hohe Bandbreite) angeboten wird, wird in der Liste LAST₃ des nächsten Netzknotens N₃ - nach Übertragung über die Drahtlosverbindung 2 mit der Verbindungsqualität Q₃₉ - in der geringeren Qualitätsklasse QEC₃₁ von "1" klassifiziert, welche z.B. für "Single Hop", hohe Verfügbarkeit und eine etwas verringerte Bandbreite, bedingt durch z.B. eine Verbindungsqualität Q₃₉ der Drahtlosverbindung 2 von 90%, steht.

Der nächste Netzknoten N₁ auf dem Ausbreitungsweg hin zum Netzknoten N₀ baut seine Liste LAST₁ wiederum auf den LAST-Listen der Netzknoten der Nachbarschaft auf, darunter der Liste LAST₃ des Netzknotens N₃, und berechnet für den Eiswarndienst S₁ erneut eine Qualitätsklasse QEC₁₁ unter Berücksichtigung, daß nun bereits zwei Hops vorliegen, und unter Berücksichtigung der Verbindungsqualität Q₁₃ vom Netzknoten N₃ zum Netzknoten N₁. In gleicher Weise erzeugt der Netzknoten N₀ wiederum seine Liste LAST₀ unter anderem aus den Daten der Liste LAST₁ durch Inkrementieren der Anzahl an Hops um 1, Berücksichtigen der Verbindungsqualität Q₀₁ und Neuklassifizieren der Dienstqualität des Eiswarndienstes S₁ in der Qualitätsklasse QEC₀₁, von z.B. "3", stellvertretend für "Triple Hop", hohe Verfügbarkeit und eine Bandbreite von z.B. 60%.

Wenn in einem Netzknoten N₁, z.B. dem Netzknoten N₀, ein und derselbe Dienst, z.B. der Eiswarndienst S₁ des Netzknoten N₉, über verschiedene Wege im Ad-hoc-Netzwerk 1 vermittelbar ist, z.B. hier über N₉-N₃-N₂-N₀, N₉-N₃-N₁-N₀, N₉-N₃-N₈-N₀ usw., dann können diese verschiedenen Möglichkeiten als verschiedene Diensteinträge Sₙ in der Liste LASTᵢ geführt werden, jeweils mit der entsprechenden Qualitätsklasse QECᵢₙ, oder es kann jeweils nur der Eintrag mit der besten Qualitätsklasse QECᵢₙ in der Liste LASTᵢ aufbewahrt werden, was zu einer impliziten Bestpfadsuche führt.

Die Verbindungsqualität Qᵢⱼ einer Drahtverbindung 2 kann von mehreren Parametern abhängen, welche ein Netzknoten bevorzugt selbst ermitteln kann, z.B. der Bandbreite und/oder der Latenz der Drahtlosverbindung 2 und/oder der Latenz des Applikationsdienstes Sₙ selbst, wenn dieser z.B. ein Verarbeitungsdienst ist. Bevorzugt kann die Verbindungsqualität Qᵢⱼ auch die Bewegungsvektoren 7 der Partner der jeweiligen Drahtlosverbindung 2 berücksichtigen: So kann damit z.B. berücksichtigt werden, daß Netzknoten, die sich gemäß ihren Vektoren 7 voraussichtlich nur kurz begegnen, siehe z.B. der dem Netzknoten N₄ entgegenkommende Netzknoten N₆ oder der den Netzknoten N₅ überholende Netzknoten N₄ in Fig. 1, eine geringere Qualitätsklasse für darüber angebotene Applikationsdienste ergeben als andere weniger dynamische Drahtlosverbindungen 2, z.B. zwischen zwei sich etwa gleich schnell und in gleicher Richtung bewegenden Netzknoten.

Nachstehende Tab. 1 zeigt einige Beispiele von Qualitätsklassen QEC, welche auf Grundlage der Anzahl, Bandbreite, Latenz und/oder Richtungsvektoren der Drahtlosverbindungen bzw. beteiligten Netzknoten und/oder der Verfügbarkeitsklasse des Dienstanbieters festgelegt werden können:

**Tab. 1**

| | |
|---|---|
| QEC = 1 | Single Hop, Verfügbarkeitswahrscheinlichkeit 100% |
| QEC = 2 | Single Hop, Verfügbarkeitswahrscheinlichkeit 90% (z.B. 100 kbit/s für 30 Sekunden) |
| QEC = 3 | Triple Hop, Verfügbarkeitswahrscheinlichkeit 80% |
| QEC = 4 | Double Hop, Verfügbarkeitswahrscheinlichkeit 60% |

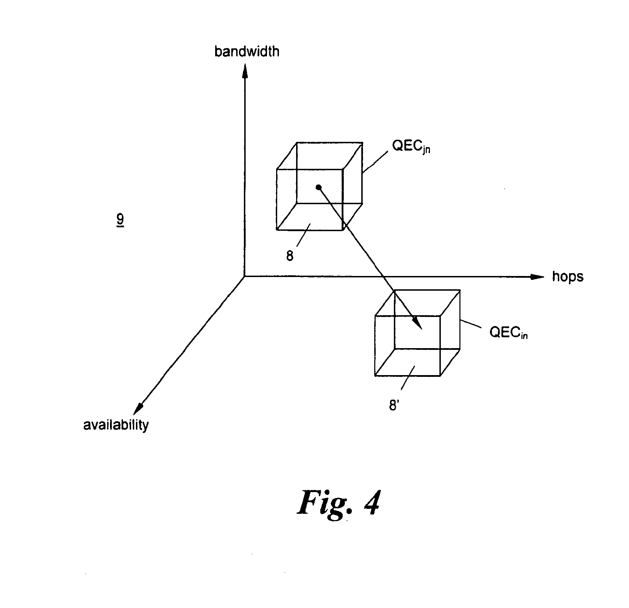

Wie in Fig. 4 dargestellt, kann die Qualitätsklasse QECᵢₙ bzw. QECⱼₙ eines Applikationsdienstes Sₙ in der Liste LASTᵢ eines Netzknotens Nᵢ bzw. Nⱼ auch als abgegrenzter Bereich 8 bzw. 8' in einem mehrdimensionalen Raum 9 angesehen werden, den die einzelnen Parameter wie Hops, Bandbreite, Verfügbarkeit usw. aufspannen. Veränderungen in einem oder mehreren dieser Parameter, wie sie z.B. bei der Weitervermittlung eines Applikationsdienstes Sₙ von einem Netzknoten Nⱼ zu einem anderen Netzknoten Nᵢ auftreten, können demgemäß in der Liste LASTᵢ des nächsten Netzknotens N₁ zur Klassifizierung in einem anderen Bereich 8' als zuvor (8) und damit einer anderen Qualitätsklasse QECᵢₙ als zuvor (QECⱼₙ) führen.

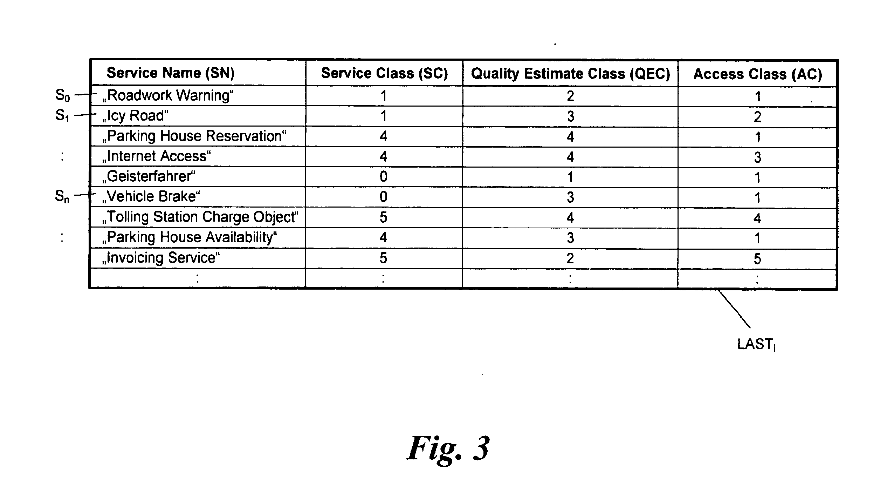

Zusätzlich zu der Qualitätsklasse QEC kann die Liste LASTᵢ für jeden Applikationsdienst Sₙ auch noch eine Dienstklasse (Service Class) SC enthalten, siehe Fig. 3 und nachstehende Tab. 2:

**Tab. 2**

| | |
|---|---|
| SID = 0 | Safety Alert Service Vehicle |
| SID = 1 | Safety Alert Service Infrastructure |
| SID = 2 | Sensor Service Vehicle |
| SID = 3 | Sensor Service Infrastructure |
| SID = 4 | Service Point |
| SID = 5 | Infrastructure Charging Point Service |
| SID = 6 | Infrastructure Tolling Info Point Service |

Die Dienstklasse SC kann beispielsweise vom Netzknoten Nᵢ oder dessen Applikationen verwendet werden, um Applikationsdienste Sₙ bestimmter Dienstklasse SC zu "buchen". Eine Softwareapplikation auf einem Netzknoten Nᵢ kann so z.B. automatische benachrichtigt werden, wenn ein Applikationsdienst Sₙ bestimmter Dienstklasse SC verfügbar wird; natürlich können auch spezifische Applikationsdienste Sₙ direkt anhand ihres Namens (Service Name, SN) in einem Netzknoten Nᵢ gebucht werden.

Die Liste LASTᵢ kann zu jedem Applikationsdienst Sₙ auch eine Zugriffsberechtigungsklasse (Access Class) AC enthalten, siehe Fig. 3 und nachstehenden Tab. 3:

**Tab. 3**

| | |
|---|---|
| AC = 1 | Free access for all |
| AC = 2 | Safety subscriber, certificate required, flat fee |
| AC = 3 | Convenience subscriber, certificate required |
| AC = 4 | Tolling Service Provider, certificate required |
| AC = 5 | Roadside Warning Service Provider, no certificate |

Die Zugriffsberechtigungsklasse AC kann von Netzknoten Nᵢ bzw. deren Software-Applikationen angewendet werden, um die Zugriffsberechtigung auf einen bestimmten Applikationsdienst zu überprüfen.

Für die Inanspruchnahme der einem Netzknoten Nᵢ zur Verfügung gestellten Applikationsdienste Sₙ kann ein netzwerkweites Zertifikatsystem implementiert werden. Zu diesem Zweck können die Netzknoten Nᵢ - bzw. die darauf laufenden Applikationen - sich gegenüber den in Anspruch genommenen Applikationsdiensten Sₙ z.B. mittels entsprechender Public/Private-Key-Zertifikate identifizieren, wie in der Technik bekannt. Dabei ist es auch möglich, zeitlich begrenzte Zertifikate zu verwenden, sodaß Applikationsdienst-Anforderungen, welche von Netzknoten mit zeitbegrenzten Zertifikaten an Applikationsdienst-Anbieter abgesandt werden, authentifiziert und zeitgesteuert und/oder zeitüberprüft ausgeführt werden können.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Netzknoten für ein Ad-hoc-Netzwerk aus einer Vielzahl gleichartiger Netzknoten, welche einander über Drahtlosverbindungen Applikationsdienise anbieten, die unterschiedlich sein Können, wobei der Netzknoten (Ni) Lokal und autark eine Liste (LASTᵢ) aller ihm von anderen Netzknoten (Nⱼ) angebotenen Applikationsdienste (Sₙ) mit zugehörigen Qualitätsklassen (QECᵢₙ) erzeugt und diese Liste (LASTᵢ) anderen Netzknoten (Nᵢ) als Liste der von ihm mit diesen Qualitätsklassen (QECᵢₙ) angebotenen Applikationsdienste (Sₙ) zur Verfügung stellt, wobei die genannte Qualitätsklasse (QE-Cᵢₙ) zumindest von der Anzahl aufeinanderfolgender Netzknoten, über die der Applikationsdienst (Sₙ) angeboten wird, und der vom letzten dieser Netzknoten angegebenen Qualitätsklasse (QECⱼₙ) abhängt.

2. Netzknoten nach Anspruch 1, **dadurch gekennzeichnet, daß** die Qualitätsklasse (QECᵢₙ) zusätzlich von der Verbindungsqualität (Qᵢⱼ) der letzten Drahtlosverbindung (2) abhängt, über die der Applikationsdienst (Sₙ) angeboten wird.

3. Netzknoten nach Anspruch 2, **dadurch gekennzeichnet, daß** die Verbindungsqualität (Qᵢⱼ) von der Bandbreite und/oder Latenz der Drahtlosverbindung (2) abhängt.

4. Netzknoten nach Anspruch 2 oder 3, **dadurch gekennzeichnet, daß** die Verbindungsqualität (Qᵢⱼ) von Bewegungsvektoren (7) der Drahtlosverbindung (2) abhängt.

5. Netzknoten nach einem der Ansprüche 1 bis 4, **dadurch gekennzeichnet, daß** er ferner eine Liste gebuchter Applikationsdienste enthält und die Liste (LASTᵢ) angebotener Applikationsdienste (Sₙ) auf gebuchte Applikationsdienste prüft und im Übereinstimmungsfall eine Applikation im Netzknoten (Nᵢ) benachrichtigt.

6. Netzknoten nach einem der Ansprüche 1 bis 5, **dadurch gekennzeichnet, daß** die Liste (LASTᵢ) angebotener Applikationsdienste (Sₙ) zu jedem Applikationsdienst (Sₙ) auch eine Zugriffsberechtigungsklasse (AC) enthält.

7. Netzknoten nach einem der Ansprüche 1 bis 6 für ein Fahrzeug-Ad-hoc-Netzwerk, **dadurch gekennzeichnet, daß** er eine Onboard-Unit (N₀-N₇) ist.

8. Verfahren zum Bereitstellen von Applikationsdiensten in einem Ad-hoc-Netzwerk (1), dessen Netzknoten (Nᵢ) einander über Drahtlosverbindungen (2) Applikationsdienste (Sₙ) anbieten, welche unterschiedlich sein Können, mit den Schritten
in einem Netzknoten (Nᵢ): Lokales und autarks Erstellen einer Liste (LASTᵢ) aller diesem Netzknoten (Nᵢ) von anderen Netzknoten (Nᵢ) angebotenen Applikationsdienste (Sₙ) mit zugehörigen Qualitätsklassen (QECᵢₙ) und Zurverfügungstellen dieser Liste (LASTᵢ) an andere Netzknoten (Nᵢ) als Liste der von ihm mit diesen Qualitätsklassen (QECᵢₙ) angebotenen Applikationsdienste (Sₙ) ,
wobei die genannte Qualitätsklasse (QECᵢₙ) zumindest von der Anzahl aufeinanderfolgender Netzknoten, über die ein Applikationsdienst (Sₙ) angeboten wird, und der vom letzten dieser Netzknoten angegebenen Qualitätsklasse (QECⱼₙ) abhängt.

9. Verfahren nach Anspruch 8, **dadurch gekennzeichnet, daß** die Qualitätsklasse (QECᵢₙ) zusätzlich von der Verbindungsqualität (Qᵢⱼ) der letzten Drahtlosverbindung (2) abhängt, über die der Applikationsdienst (Sₙ) angeboten wird.

10. Verfahren nach Anspruch 9, **dadurch gekennzeichnet, daß** die Verbindungsqualität (Qᵢⱼ) von der Bandbreite, der Latenz und/oder von Bewegungsvektoren (7) der Drahtlosverbindung (2) abhängt.

## Claims

1. Network node for an ad-hoc network having a plurality of network nodes of the same type, which provide one another with application services, which can be different, via wireless connections, wherein the network node (Nᵢ) locally and autarkically generates a list (LASTᵢ) of all application services (Sₙ) provided to it by other network nodes (Nⱼ) with associated quality classes (QECᵢₙ) and makes this list (LASTᵢ) available to other network nodes (Nᵢ) as list of the application services (Sₙ) provided by it with such quality classes (QECᵢₙ), wherein said quality class (QECᵢₙ) is at least dependent on the number of consecutive network nodes, via which the application service (Sₙ) is provided, and the quality class (QECⱼₙ) specified by the last of these network nodes.

2. Network node according to claim 1, **characterised in that** the quality class (QECᵢₙ) is additionally dependent on the connection quality (Qᵢⱼ) of the last wireless connection (2), via which the application service (Sₙ) is provided.

3. Network node according to claim 2, **characterised in that** the connection quality (Qᵢⱼ) is dependent on the bandwidth and/or the latency of the wireless connection (2).

4. Network node according to claim 2 or 3, **characterised in that** the connection quality (Qᵢⱼ) is dependent on movement vectors (7) of the wireless connection (2).

5. Network node according to one of claims 1 to 4, **characterised in that** it additionally contains a list of booked application services and checks the list (LASTᵢ) of provided application services (Sₙ) for booked application services and in the case of a match notifies an application in the network node (Nᵢ).

6. Network node according to one of claims 1 to 5, **characterised in that** the list (LASTᵢ) of provided application services (Sₙ) also contains an access authorisation class (AC) for each application service (Sₙ).

7. Network node according to one of claims 1 to 6 for a vehicular ad-hoc network, **characterised in that** it is an onboard unit (N₀-N₇).

8. Process for providing application services in an ad-hoc network (1), the network nodes (Nᵢ) of which provide one another with application services (Sₙ), which can be different, via wireless connections (2), with the steps
in one network node (Nᵢ): locally and autarkically creating a list (LASTᵢ) of all application services (Sₙ) provided to this network node (Nᵢ) by other network nodes (Nᵢ) with associated quality classes (QECᵢₙ) and making available this list (LASTᵢ) for other network nodes (Nᵢ) as list of the application services (Sₙ) provided by it with such quality classes (QECᵢₙ),
wherein said quality class (QECᵢₙ) is at least dependent on the number of consecutive network nodes, via which the application service (Sₙ) is provided, and the quality class (QECⱼₙ) specified by the last of these network nodes.

9. Process according to claim 8, **characterised in that** the quality class (QECᵢₙ) is additionally dependent on the connection quality (Qᵢⱼ) of the last wireless connection (2), via which the application service (Sₙ) is provided.

10. Process according to claim 9, **characterised in that** the connection quality (Qᵢⱼ) is dependent on the bandwidth, the latency and/or movement vectors (7) of the wireless connection (2).

## Revendications

1. Noeud de réseau pour un réseau ad hoc constitué d'une pluralité de noeuds de réseau du même type, qui proposent les uns aux autres des services d'application, pouvant être différents, via des liaisons sans fil, le noeud de réseau (Nᵢ) générant, localement et en autracie, une liste (LASTᵢ) de tous les services d'application (Sₙ), proposés à lui par d'autres noeuds de réseau (Nⱼ), avec les classes de qualité (QECᵢₙ) associées, et ladite liste (LASTᵢ) étant mise à la disposition d'autres noeuds de réseau (Nᵢ) en tant que liste des services d'application (Sₙ) qu'il propose avec ces classes de qualité (QECᵢₙ) , ladite classe de qualité (QECᵢₙ) dépendant au moins du nombre de noeuds de réseau consécutifs, via desquels est proposé le service d'application (Sₙ), et de la classe de qualité (QECⱼₙ) indiquée par le dernier de ces noeuds de réseau.

2. Noeud de réseau selon la revendication 1, **caractérisé en ce que** la classe de qualité (QECᵢₙ) dépend, en plus, de la qualité de liaison (Qᵢⱼ) de la dernière liaison sans fil (2), via laquelle est proposé le service d'application (Sₙ).

3. Noeud de réseau selon la revendication 2, **caractérisé en ce que** la qualité de liaison (Qᵢⱼ) dépend de la largeur de bande et/ou de la latence de la liaison sans fil (2).

4. Noeud de réseau selon la revendication 2 ou 3, **caractérisé en ce que** la qualité de liaison (Qᵢⱼ) dépend des vecteurs de mouvement (7) de la liaison sans fil (2).

5. Noeud de réseau selon l'une quelconque des revendications 1 à 4, **caractérisé en ce qu'** il comporte, en outre, une liste de services d'application comptabilisés, et la présence de services d'application comptabilisés est contrôlée dans la liste (LASTᵢ) de services d'application (Sₙ) proposés, et en cas de concordance, informe une application dans le noeud de réseau (Nᵢ).

6. Noeud de réseau selon l'une quelconque des revendications 1 à 5, **caractérisé en ce que** la liste (LASTᵢ) des services d'application (Sₙ) proposés contient également une classe d'autorisation d'accès (AC) à chaque service d'application (Sₙ).

7. Noeud de réseau selon l'une quelconque des revendications 1 à 6 pour un réseau ad hoc de véhicule, **caractérisé en ce qu'**il s'agit d'une unité embarquée (N₀-N₇).

8. Procédé de mise à disposition de services d'application dans un réseau ad hoc (1), dont les noeuds de réseau (Nᵢ) proposent les uns aux autres des services d'application (Sₙ), pouvant être différents, via des liaisons sans fil (2), comportant les étapes
dans un noeud de réseau (Nᵢ) : élaboration, localement et en autarcie, d'une liste (LASTᵢ) de tous les services d'application (Sₙ), proposés à ce noeud de réseau (Nᵢ) par d'autres noeuds de réseau (Nᵢ), avec les classes de qualité (QECᵢₙ) associées, et mise à disposition de ladite liste (LASTᵢ) aux autres noeuds de réseau (Nᵢ) en tant que liste des services d'application (Sₙ) qu'il propose avec ces classes de qualité (QECᵢₙ),
ladite classe de qualité (QECᵢₙ) dépendant au moins du nombre de noeuds de réseau consécutifs, via desquels est proposé un service d'application (Sₙ), et de la classe de qualité (QECⱼₙ) indiquée par le dernier de ces noeuds de réseau.

9. Procédé selon la revendication 8, **caractérisé en ce que** la classe de qualité (QECᵢₙ) dépend, en plus, de la qualité de liaison (Qᵢⱼ) de la dernière liaison sans fil (2), via laquelle est proposé le service d'application (Sₙ).

10. Procédé selon la revendication 9, **caractérisé en ce que** la qualité de liaison (Qᵢⱼ) dépend de la largeur de bande, de la latence et/ou des vecteurs de mouvement (7) de la liaison sans fil (2).
